# FASCICULE DE BREVET EUROPEEN

(11) **EP 2 347 140 B1**
(45) Date de publication et mention de la délivrance du brevet: **15.08.2012**
(21) Numéro de dépôt: 09768192.8
(22) Date de dépôt: 16.11.2009
(51) Int. Cl.: F16B 31/04, F16B 35/06, F16C 17/02, F16C 17/14, F16C 32/06, F16C 33/04, F04D 29/047

(54) **BAGUE POUR PALIER HYDROSTATIQUE OU HYDRODYNAMIQUE, MACHINE HYDRAULIQUE EQUIPEE D'UNE TELLE BAGUE ET PROCEDE DE MONTAGE D'UNE TELLE BAGUE SUR UN ARBRE**
RING FÜR EIN HYDROSTATISCHES UND HYDRODYNAMISCHES LAGER, MIT SOLCH EINEM RING VERSEHENE HYDRAULISCHE MASCHINE UND VERFAHREN ZUR BEFESTIGUNG SOLCH EINES RINGS AUF EINER WELLE
RING FOR A HYDROSTATIC AND HYDRODYNAMIC BEARING, HYDRAULIC MACHINE PROVIDED WITH SUCH A RING AND METHOD FOR MOUNTING SUCH A RING ON A SHAFT

(30) Priorité: 18.11.2008 FR 0857817
(43) Date de publication de la demande: 27.07.2011
(73) Titulaire: Alstom Hydro France, 92300 Levallois Perret (FR)
(72) Inventeur: MELET, Luc, F-38430 Moirans (FR)
(74) Mandataire: Myon, Gérard Jean-Pierre
(86) Numéro de dépôt international: PCT/FR2009/052185
(87) Numéro de publication internationale: WO 2010/058114

(56) Documents cités:
- DE-A1- 2 711 938
- GB-A- 913 851
- US-A- 3 317 254
- US-A- 3 549 215
- US-A- 3 738 717

## Description

L'invention a trait à une bague destinée à être montée serrée autour d'un arbre de machine hydraulique pour former une partie d'un palier hydrostatique ou hydrodynamique. L'invention a également trait à une machine hydraulique comprenant, entre autres, une telle bague. Enfin, l'invention a trait à un procédé de montage d'une telle bague sur un arbre de machine hydraulique, pour former une partie d'un palier hydrostatique ou hydrodynamique.

Une machine hydraulique comprend une partie tournante, telle qu'une roue de turbine ou de turbine-pompe, qui est destinée à être traversée par un écoulement forcé, lequel est moteur lorsque la machine fonctionne en turbine et entraîné lorsque la machine fonctionne en pompe. Dans une telle machine, un palier hydrostatique ou hydrodynamique radial peut être prévu autour d'un arbre qui supporte la roue, avec une fonction de reprise des efforts radiaux subis par cet arbre. La partie radiale interne d'un tel palier est parfois constituée d'une bague métallique qui forme une frette, en ce sens qu'elle est montée serrée autour de l'arbre. Cette bague est généralement monobloc, c'est-à-dire s'étend en une pièce sur 360° autour de l'arbre, ce qui assure la continuité de sa surface radiale externe qui constitue la surface radiale interne du palier. Le fait que la bague est en une partie est source de contraintes de conception et de montage.

Par ailleurs US-A-3 738 717, sur lequel le préambule de la revendication 1 est basé, propose une bague en deux parties comprise dans un palier hydrodynamique.

Des bagues multipartites en métal pourraient être envisagées, celles-ci étant assemblées autour de l'arbre par soudage ou par des moyens mécaniques. Pour assurer une bonne continuité et un caractère circulaire aussi exact que possible de la surface radiale externe d'une telle bague, des reprises d'usinage devraient être effectuées sur la bague, une fois celle-ci assemblée autour de l'arbre, après que les orifices de passage de moyens d'assemblage tels que des boulons auraient été comblés. En pratique, ces opérations d'usinage, à réaliser sur site seraient longues et difficiles, alors qu'elles ne garantiraient pas la continuité et la circularité de la surface extérieure de la bague.

Par ailleurs, il existe des bagues en céramique qui ne peuvent pas être assemblées par soudage et avec lesquelles l'utilisation de moyens d'assemblage mécanique induirait des discontinuités de matière sur leur surface externe. C'est pourquoi, ces bagues sont toujours monoblocs, ce qui impose de les introduire sur un arbre de machine hydraulique par une extrémité de celui-ci qui doit avoir des dimensions transversales inférieures aux dimensions de l'alésage central de la bague. Ceci peut s'avérer problématique dans le cas où un arbre est pourvu d'extrémités inférieure et supérieure, dites « pied » et « tête » qui sont élargies pour coopérer respectivement avec une roue de turbine et/ou l'arbre d'entrée d'un alternateur.

C'est à ces inconvénients qu'entend plus particulièrement remédier l'invention en proposant une nouvelle bague dont le montage autour d'un arbre de machine hydraulique est facilité, sans induire de discontinuité notable de sa surface radiale externe, ce qui lui permet de constituer la partie interne d'un palier hydrostatique ou hydrodynamique sans avoir recours à des reprises d'usinage.

A cet effet, l'invention concerne une bague destinée à être montée serrée autour d'un arbre de machine hydraulique pour former une partie d'un palier hydrostatique ou hydrodynamique, comprenant dans une direction circonférentielle, au moins un premier tronçon et au moins un deuxième tronçon, ainsi que des moyens de montage des premier et deuxième tronçons autour d'un arbre, chaque tronçon comprenant une surface radiale externe, une surface radiale interne et deux tranches reliant ces surfaces radiales externe et interne, le premier tronçon étant pourvu d'au moins un taraudage accessible par une de ses tranches et adapté pour recevoir une vis faisant saillie à partir d'une tranche du deuxième tronçon, la ou chaque vis étant pourvue, sur la partie de sa tige qui fait saillie par rapport à la tranche du deuxième tronçon, d'au moins un relief de manoeuvre de la tige en rotation autour d'un axe longitudinal de cette tige pour visser ou dévisser la vis dans le taraudage, la ou chaque vis étant pourvue d'un piston coulissant dans un logement ménagé dans le deuxième tronçon, ce logement étant débouchant sur la tranche du deuxième tronçon et isolé de l'extérieur par un palier dans lequel peut coulisser la tige de la vis, et le deuxième tronçon étant équipé de moyens d'alimentation en fluide sous pression d'une chambre de volume variable ménagée entre le piston et le palier, à l'intérieur du logement précité.

Grâce à l'invention, les deux tronçons d'une bague, formant une frette à monter sur un arbre de machine hydraulique, peuvent être assemblés en engageant la tige de chacune des vis faisant saillie à partir du deuxième tronçon dans un taraudage correspondant du premier tronçon, puis en manoeuvrant cette vis pour la visser dans le taraudage grâce au(x) relief(s) prévu(s) sur sa tige. Lorsque cette première étape a été mise en oeuvre, il est possible de finaliser le serrage de la bague-frette autour de l'arbre de la machine hydraulique en injectant un fluide sous pression dans chaque chambre délimitée en partie par les pistons des vis, ce qui a pour effet d'exercer un effort de traction transmis au premier tronçon. Ceci plaque fermement la tranche du premier tronçon contre la tranche du deuxième tronçon. La structure de la bague est notamment remarquable en ce que le taraudage, d'une part, et le logement, d'autre part, débouchent sur les tranches des premier et deuxième tronçons, de sorte que, lorsque ces tranches sont en appui l'une contre l'autre, ces volumes creux ne créent pas de discontinuité sur la surface radiale externe de la bague-frette. Cette surface peut donc constituer la surface radiale interne d'un palier hydrostatique ou hydrodynamique, sans nécessiter de reprise d'usinage. Le fait que la bague est multipartite facilite la conception et offre de multiples possibilités d'utilisation, notamment pour les chantiers de réhabilitation où la géométrie de l'arbre de turbine est imposée.

Selon des aspects avantageux mais non obligatoires de l'invention, une bague telle que mentionnée ci-dessus peut incorporer une ou plusieurs des caractéristiques suivantes, prises dans toute combinaison techniquement admissible :
- Chaque tronçon est pourvu, sur une première tranche, d'au moins un taraudage de réception d'une vis faisant saillie à partir d'une première tranche de l'autre tronçon et, sur une deuxième tranche, d'une vis en saillie destinée à être engagée dans un taraudage accessible par la deuxième tranche de l'autre tronçon. Selon cet aspect de l'invention, chaque tronçon porte donc des taraudages et des vis destinés à coopérer respectivement avec des vis et des taraudages de l'autre tronçon.
- Chaque premier tronçon est pourvu de plusieurs taraudage, répartis sur la hauteur de sa tranche prise parallèlement à un axe central de sa surface radiale interne, alors que chaque deuxième tronçon est pourvu de plusieurs vis en saillie, en nombre égal au nombre de taraudage du premier tronçon, ces vis étant réparties sur la hauteur de sa tranche prise parallèlement à un axe central de sa surface radiale interne.

- Chaque piston d'une vis est disposé dans un logement dédié et les moyens d'alimentation des chambres des différents logements en fluide sous pression sont communs à au moins deux telles chambres.
- Les moyens d'alimentation comprennent au moins un conduit reliant au moins deux chambres dans lesquelles sont disposés les pistons de deux vis distinctes.
- En configuration assemblée des premier et deuxième tronçons, la ou chaque chambre dans laquelle est disposé le piston d'une vis est au moins partiellement remplie d'un matériau solide.
- Il est prévu des moyens d'alimentation en fluide sous pression d'une deuxième chambre de volume variable délimitée par le piston à l'intérieur du logement, à l'opposé du palier.

L'invention concerne également une machine hydraulique qui comprend un organe tournant supporté par un arbre autour duquel est disposé un palier hydrostatique ou hydrodynamique, cette machine comprenant une bague telle que mentionnée ci-dessus montée autour de l'arbre précité et définissant une surface radiale interne du palier hydrostatique ou hydrodynamique.

Une telle machine est plus facile à installer et à entretenir que celles de l'état de la technique.

Enfin, l'invention concerne un procédé de montage d'une bague sur un arbre de machine hydraulique pour former une partie d'un palier hydrostatique ou hydrodynamique, ce procédé comprenant des étapes consistant à :
- a) approcher l'un de l'autre au moins un premier tronçon circonférentiel et au moins un deuxième tronçon circonférentiel, comprenant chacun une surface radiale externe, une surface radiale interne et deux tranches reliant leurs surfaces radiales externes et internes, l'un de l'autre en amenant au moins une première tranche du premier tronçon en regard d'une première tranche du deuxième tronçon,
- b) engager au moins une vis faisant saillie par rapport à la première tranche du deuxième tronçon vers un taraudage accessible par la première tranche du premier tronçon,
- c) visser la vis dans le taraudage en l'entraînant en rotation autour d'un axe longitudinal de sa tige, par action sur un relief de cette tige disposé entre les tranches des premier et deuxième tronçons et
- d) injecter un fluide sous pression dans une chambre de volume variable délimitée par un piston solidaire de la vis et coulissant dans un logement ménagé dans le deuxième tronçon.

Grâce au procédé de l'invention, on obtient un assemblage serré des tronçons de la bague autour de l'arbre de la machine hydraulique, sans créer de discontinuité de surface notable sur l'extérieur de cette bague.

Selon un aspect avantageux de l'invention, le fluide sous pression est solidifié postérieurement à son injection dans la chambre de volume variable. La masse de matière solidifiée immobilise alors le piston dans une configuration de serrage des tronçons constitutifs de la bague autour de l'arbre de la machine hydraulique.

L'invention sera mieux comprise et d'autres avantages de celle-ci apparaîtront plus clairement à la lumière de la description qui va suivre d'un mode de réalisation d'une bague, d'une machine hydraulique et d'un procédé de montage conformes à l'invention, donnée uniquement à titre d'exemple et faite en référence aux dessins annexés dans lesquels :
- la figure 1 est une coupe axiale de principe d'une installation incorporant une machine conformé à l'invention ;
- la figure 2 est une section à plus grande échelle selon la ligne II-II à la figure 1 ;
- la figure 3 est une vue de dessus d'une bague bipartite utilisée dans l'installation de la figure 1 avant assemblage et avec arrachement partiel ;
- la figure 4 est une vue à plus grande échelle du détail IV à la figure 3 ;
- la figure 5 est une vue analogue à la figure 4, lors d'une première étape d'assemblage de la bague ;
- la figure 6 est une vue analogue à la figure 4, lors d'une deuxième étape d'assemblage de la bague ;
- la figure 7 est une coupe à plus petite échelle selon la ligne VII-VII à la figue 6 ;
- la figure 8 est une vue à plus grande échelle du détail VIII à la figue 7; et
- la figure 9 est une vue analogue à la figure 4 lorsque la bague est en configuration serrée autour de l'arbre de la machine représentée à la figure 1.

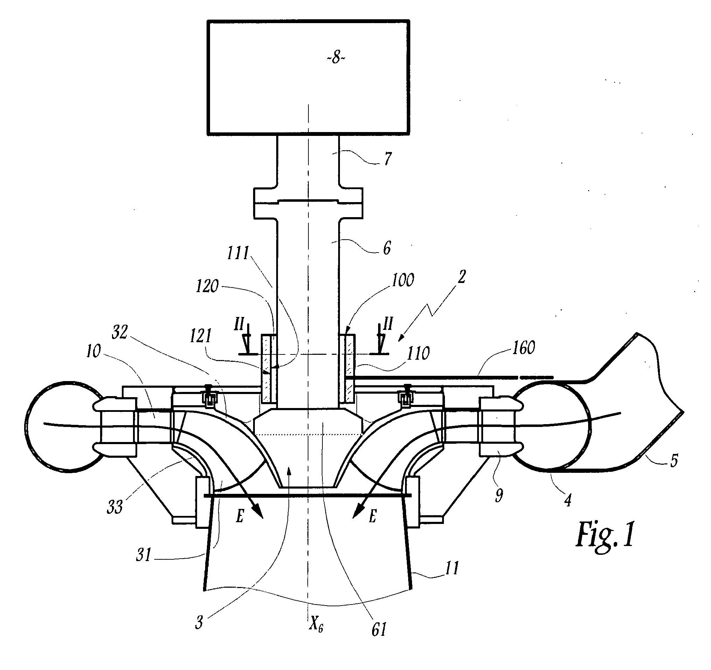

L'installation 1 représentée à la figure 1 comprend une turbine Francis 2 dont la roue 3 est alimentée à partir d'une bâche 4 dans laquelle débouche une conduite forcée 5.

La turbine 2 comprend également un arbre 6 sur lequel est montée la roue 3 et qui tourne avec elle autour d'un axe vertical X₆, cet axe étant également un axe longitudinal de l'arbre 6. L'arbre 6 est solidaire en rotation d'un autre arbre 7 formant un organe d'entraînement d'un alternateur 8.

Entre la bâche 4 et la roue 3 est disposée une série d'avant-directrices 9 et de directrices 10 dont la fonction est de guider un écoulement E provenant de la conduite 5 et de la bâche 4 et destiné à traverser la roue 3 en direction d'un conduit d'aspiration 11.

La roue 3 comprend des aubes 31 qui s'étendent entre un plafond 32 et une ceinture 33.

La roue 3 est fixée sur l'extrémité inférieure 61 de l'arbre 6 parfois dénommée « pied d'arbre ». Le pied d'arbre 61 peut être monobloc avec le reste de l'arbre 6 ou rapporté sur celui-ci. Le montage de la roue 3 sur le pied d'arbre 61 a lieu par des moyens connus en soi, tels que des vis non représentées.

Un palier hydrostatique 100 est formé autour de l'arbre 6, au-dessus du pied d'arbre 61, afin de reprendre les efforts transversaux subis par l'arbre 6 en cours de rotation des parties mobiles 3 et 6 de la turbine 2 autour de l'axe X₆.

En variante, le palier 100 peut être un palier hydrodynamique.

Ce palier 100 est défini entre une garniture fixe 110 et une bague 120 formant frette, c'est-à-dire montée serrée autour de l'arbre 6. La garniture 110 est fixe en ce sens qu'elle ne tourne pas autour de l'axe X₆ lorsque la roue 3 et l'arbre 6 tournent. La garniture 110 est donc immobile par rapport à la structure de la turbine 2 qui comprend, notamment, les éléments 4 et 5.

Le palier 100 est délimité entre la surface radiale interne 111 de la garniture 110 et la surface radiale externe 121 de la bague 120, ces surfaces étant toutes deux cylindriques, circulaires et centrées sur l'axe X₆ en configuration montée de la turbine 2.

Une ligne d'alimentation 160 permet d'alimenter en eau claire sous pression l'interstice correspondant au palier 100 entre les surfaces 111 et 121, à travers la garniture 110.

Compte tenu du mouvement de rotation entre la surface 121 et la surface 111, il importe que la surface 121 soit le plus possible continue et dépourvue d'aspérités ou d'irrégularités.

Pour pouvoir être monté facilement autour de l'arbre 6, la bague 120 est formée de deux tronçons 122 et 124 qui sont assemblés autour de l'arbre 6 en exerçant sur celui-ci un effort centripète, de sorte que la bague 120 constitue une frette pour l'arbre 6.

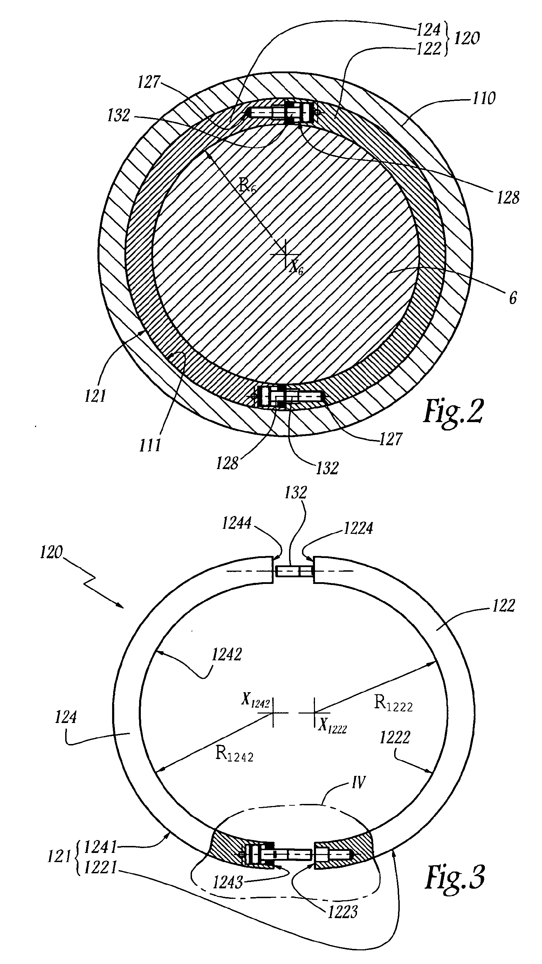

La structure de la bague 120 ressort des figures 2 à 9.

Le tronçon 122 est semi-circulaire et comprend une surface radiale externe 1221, une surface radiale interne 1222 et deux tranches 1223 et 1224 reliant respectivement les surfaces 1221 et 1222. De la même façon, le tronçon 124 est défini entre une surface radiale externe 1241, une surface radiale interne 1242 et deux tranches 1243 et 1244 qui relient les surfaces 1241 et 1242. La réunion des surfaces 1221 et 1241 constitue la surface 121 de la bague 120. Les tronçons 122 et 124 sont circonférentiels en ce sens que leurs surfaces internes 1222 et 1242 sont aboutées pour constituer la surface circonférentielle interne 121 de la bague 120. Les surfaces 1222 et 1242 ont chacune un rayon R₁₂₂₂ ou R₁₂₄₂ égal, voire légèrement inférieur, au rayon R₆ de l'arbre 6, dans sa partie autour de laquelle est montée la bague 120.

Un serrage est ainsi obtenu entre la bague 120 et l'arbre 6 afin d'éviter un mouvement relatif entre ces éléments. Ce serrage est, de préférence, « léger », en ce sens qu'il n'est pas forcément suffisant pour reprendre le couple de grippage en cas d'avarie sur le palier 100. Ce serrage est défini pour reprendre les effets de dilatation dus au gradient de température entre l'arbre 6 et la bague 120, ainsi que les effets de dilatation par effet centrifuge. Un chauffage modéré des pièces 6, 122 et 124 facilite la mise en place de la bague 120 autour de l'arbre. Le couple de grippage, qui est plus important, peut être repris par une clavette non représentée disposée entre l'arbre et la bague.

Le tronçon 122 est pourvu d'un alésage 126 qui débouche sur la tranche 1223 et qui se prolonge, à l'opposé de cette tranche, par un taraudage 127 centré sur un axe X₁₂₇ perpendiculaire à la tranche 1223. Ainsi, le taraudage 127 est accessible à partir de la tranche 1223, à travers l'alésage 126 et l'on peut considérer que le taraudage 127 débouche sur la tranche 1223, par l'intermédiaire de l'alésage 126.

Par ailleurs, le tronçon 124 est pourvu d'un logement 128 qui débouche sur la tranche 1243 de ce tronçon et dans lequel est engagée une tête 130 en forme de piston qui appartient à une vis 132 dont on note 134 la tige.

La tige 134 de la vis 132 traverse un palier 136 vissé dans l'embouchure du logement 128 qu'il isole donc de l'extérieur. Les dimensions du palier 136 et de la tige 134 sont telles que cette tige peut coulisser dans ce palier, selon son axe longitudinal X₁₃₂.

Des joints 138 assurent l'étanchéité de l'interface entre, d'une part, le palier 136 et la tige 134 et, d'autre part, le palier 136 et le tronçon 124.

Deux chambres C₁ et C₂ sont définies de part et d'autre du piston 130 d'une vis 32, à l'intérieur du logement 128 correspondant. La chambre C₁ est délimitée entre le palier 136 et le piston 130, alors que la chambre C₂ est délimitée entre le piston 130 et le fond 1281 du logement 128, à l'opposé du palier 136.

La tige 134 est filetée sur une partie de sa longueur, au voisinage de son extrémité opposée à la tête 130. Dans sa partie intermédiaire 135, située entre sa partie filetée et sa tête ou piston 130, la tige 134 est pourvue de deux méplats 140 diamétralement opposés autour de l'axe X₁₃₂. Ces méplats permettent d'entraîner en rotation la tige 134 autour de l'axe X₁₃₂ lorsqu'il convient de visser ou de dévisser la vis 132 dans le taraudage 127.

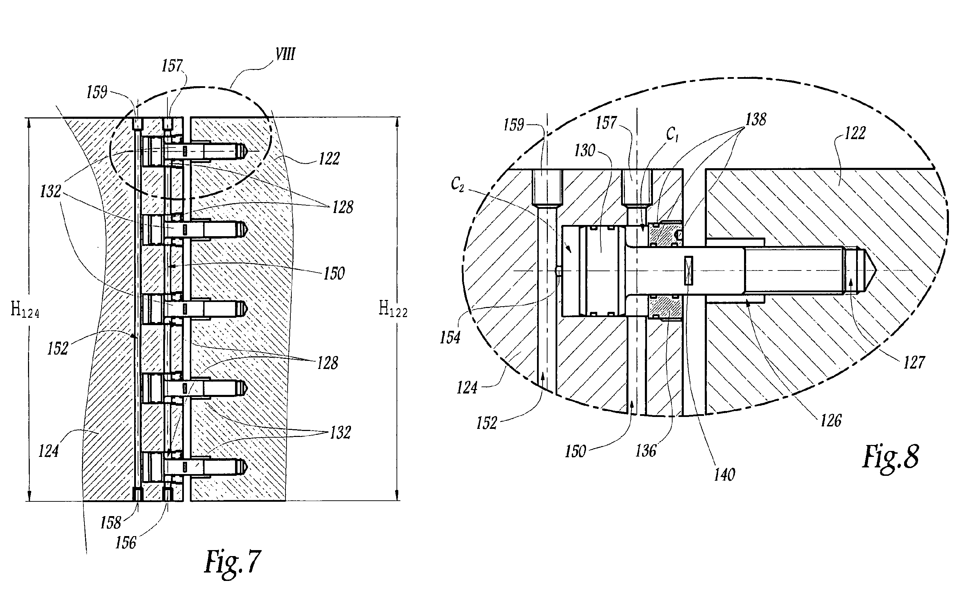

Comme il ressort plus particulièrement de la figure 7 le tronçon 122 est équipé de cinq alésages 126 et de cinq de taraudages 127 sur sa hauteur H₁₂₂, c'est-à-dire sur sa dimension prise parallèlement à l'axe de symétrie X₁₂₂₂ de la surface 1222 qui est confondu avec l'axe X₆ en configuration montée de la bague 120. De la même façon, le tronçon 124 est équipé de cinq logements 128, de cinq paliers 136 et de cinq vis 132 superposés et destinées à être engagés simultanément dans les alésages et logements 126 et 127 du tronçon 122. Ces logements 128 sont répartis sur la hauteur H₁₂₄ du tronçon 124, c'est-à-dire sa dimension parallèle à l'axe de symétrie X₁₂₄₂ de sa surface 1242, lequel axe est confondu avec l'axe X₆ en configuration montée de la bague 120 autour de l'arbre 6. Les hauteurs H₁₂₂ et H₁₂₄ ont la même valeur.

Le nombre de logements 128 est adaptée à la hauteur H₁₂₂ ou H₁₂₄ et au diamètre des têtes 130.

Un premier conduit 150 s'étend dans le tronçon 124 parallèlement à la hauteur H₁₂₄. Ce conduit relie entre elles les chambres C₁ des différents logements 128.

Un second conduit 152 s'étend sur la hauteur H₁₂₄ du tronçon 124, parallèlement au tronçon 150. Ce conduit 152 est relié par des piquages 154 à chacune des chambres C₂.

Les conduits 150 et 152 sont équipés de raccords, respectivement 156 et 158, permettant de les alimenter avec un fluide sous pression, notamment une résine polymérisable. Des raccords 157 et 159 équipent respectivement les extrémités des conduits 150 et 152 opposées aux raccords 156 et 159 et permettent de relier ces conduits à des circuits d'évacuation ou de recirculation de fluide sous pression en excès

En pratique, le tronçon 122 est également équipé, au niveau de sa tranche 1244, de cinq logements 128, de cinq paliers 136 et de cinq vis 132, alors que le tronçon 124 est, quant à lui, pourvu de cinq alésages 126 et de cinq taraudages 127. En d'autres termes, une interface du même type de l'interface réalisée entre les tranches 1223 et 1243 est réalisée au niveau des tranches 1224 et 1244, la structure étant simplement inversée entre ce qui appartient au tronçon 122 et ce qui appartient au tronçon 124.

Les tronçons 122 et 124 sont donc identiques, ce qui est avantageux en termes de fabrication et de gestion des pièces détachées.

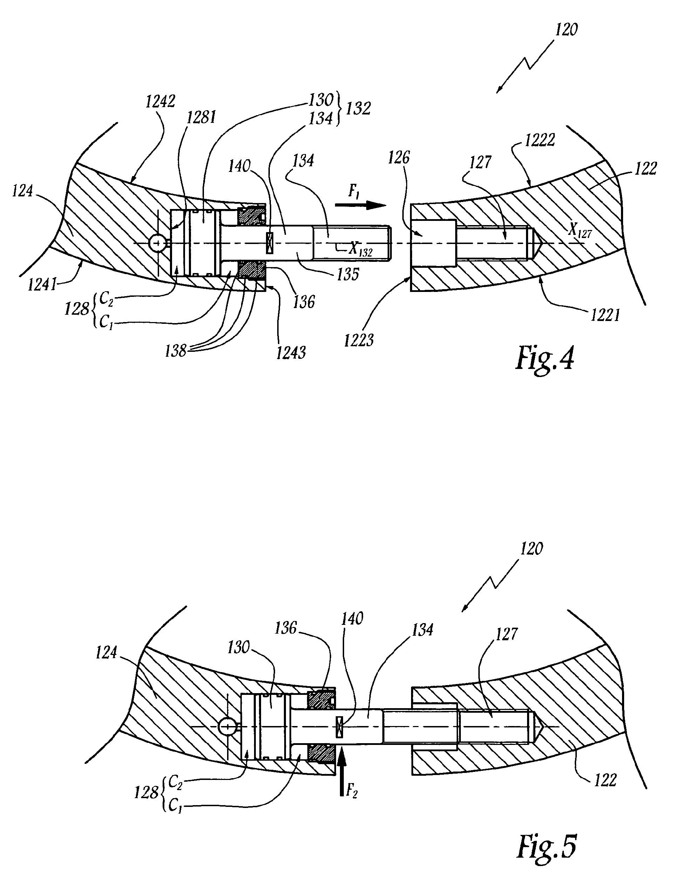

Pour la clarté du dessin, l'arbre 6 n'est pas représenté aux figures 4 à 9.

Lorsqu'il convient d'assembler la bague 120 autour de l'arbre 6, on amène les tronçons 122 et 124 autour de cet arbre en mettant en regard respectivement les tranches 1223 et 1243, d'une part, et les tranches 1224 et 1244, d'autre part. On est alors dans la configuration de la figure 4 dans laquelle on peut déplacer le tronçon 124 vers le tronçon 122, dans le sens de la flèche F₁, parallèlement aux axes X₁₂₇ et Y₁₃₂ qui sont alors alignés, ce qui a pour effet d'engager la tige dans l'alésage 126 et au début du taraudage 127.

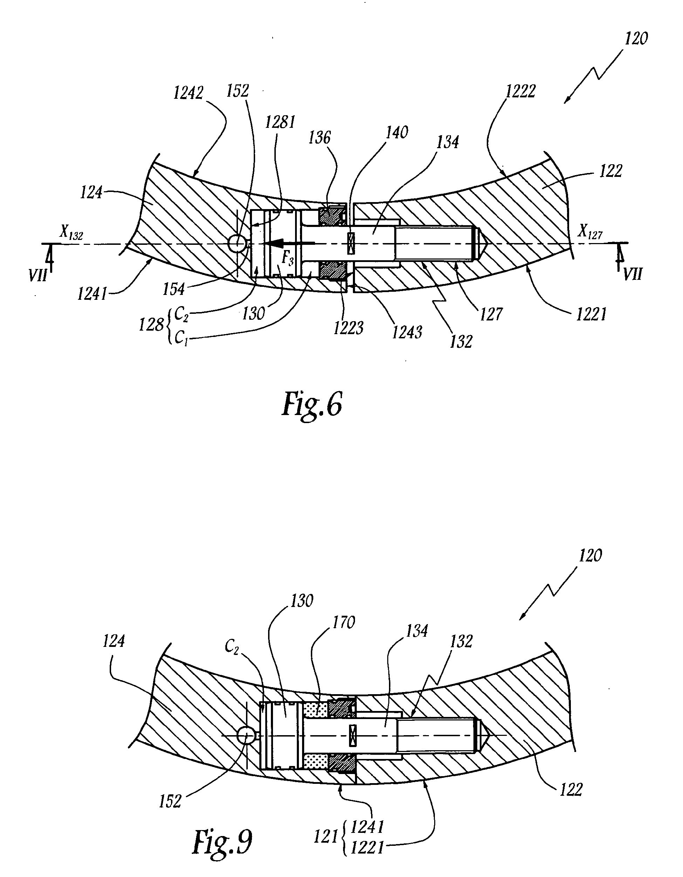

Dans cette configuration représentée à la figure 5, les méplats 140 sont accessibles pour un outil, tel qu'une clé, introduit dans le sens de la flèche F₂, entre les tranches 1223 et 1243. Cet outil permet d'entraîner en rotation la tige 134 autour de l'axe X₁₃₂ de façon à serrer la vis 132 dans le taraudage 127. Ceci a pour effet de rapprocher les tranches 1223 et 1243 l'une de l'autre, jusqu'à atteindre la configuration de la figure 6.

On procède de la même façon pour les vis 132 disposées au niveau de la tranche 1224.

Dans la configuration de la figure 6, une résine thermodurcissable est injectée, sous une pression de 1500 bars environ, dans le conduit 150. Cette résine se répartit, autour des vis 132, dans les différentes chambres C₁ du tronçon 124 et sa pression est telle qu'elle exerce sur les différents pistons 130 un effort, représenté par la flèche F₃, suffisant pour déplacer chaque piston en direction du fond 1281, jusqu'à la configuration de la figure 9 où les tranches 1223 ou 1243 sont fermement en appui l'une contre l'autre.

Lors du mouvement des pistons 130 vers les fonds 1281 des logements 128, l'air présent dans les chambres C₂ est évacué à travers les piquages 154 et le conduit 152.

La pression d'alimentation de la résine est maintenue pendant un temps suffisant pour permettre sa polymérisation, de telle sorte que cette résine se transforme en une masse solide 170 qui verrouille les pistons 130 dans la configuration de la figure 9 où les surfaces externes 1221 et 1241 se raccordent l'une à l'autre sans discontinuité apparente, de telle sorte que la surface 121 ne présente pas d'irrégularité notable.

On comprend que l'alimentation des chambres C₁ en résine polymérisable sous pression a lieu simultanément au voisinage de la tranche 1243 du tronçon 124 et de la tranche 1224 du tronçon 122, de telle sorte qu'un effort régulier de resserrement des tronçons 122 et 124 autour de l'arbre 6 est obtenu.

Cet effort est maintenu tant que les chambres C₁ sont remplies de résine polymérisée. On obtient donc un verrouillage « mécanique » des vis 132 dans les logements 126, dans une configuration où les tranches 1223 et 1243, d'une part, 1224 et 1244, d'autre part, sont en appui ferme les unes contre les autres. Tant que la masse 170 de résine polymérisée conserve ses propriétés, il ne peut exister de relâchement des vis 132 par rapport aux logements 128.

Il peut parfois être nécessaire de démonter la bague 120, par exemple pour une opération de maintenance. Dans ce cas, les tronçons 122 et 124 sont réchauffés au voisinage des logements 128, ce qui a pour effet de rendre à nouveau fluide la résine présente dans les chambres C₁. Il est alors possible d'injecter, dans les chambres C₂ et à travers le conduit 152 et les piquages 154, un autre fluide sous pression, ce qui a pour effet de déplacer les différents pistons 130 en direction des paliers 136, au point que les tranches 1223 et 1243, d'une part, 1224 et 1244, d'autre part, sont écartées l'une de l'autre, rendant à nouveau accessibles les méplats 140 qui permettent de manoeuvrer les vis 132 dans un sens de dévissage par rapport au taraudage 127.

On peut ainsi séparer les tronçons 122 et 124.

A cette occasion, la résine rendue fluide est évacuée par le conduit 150 et l'un des raccords 156 ou 157.

Ainsi, l'invention permet de solidariser, efficacement et de façon pérenne, deux tronçons 122 et 124 constitutifs d'une bague 120, alors que la surface radiale externe 121 de cette bague ne présente pas de discontinuité notable puisque, une fois les tranches 1223 et 1243, d'une part, 1224 et 1244, d'autre part, en appui les unes contre les autres, les logements et alésages utilisés sont masqués.

De façon très avantageuse, l'effort de serrage exercé par chaque vis 132 s'exerce au voisinage de la fibre neutre de chacun des tronçons 122 et 124.

En outre, cet effort peut être réparti sur la hauteur des tronçons 122 et 124, grâce à la répartition des taraudages 127 et des logements 128 sur la hauteur de ces tronçons. Ceci présente un avantage substantiel par rapport au cas où des boulons de serrage seraient installés au-dessus du bord supérieur et en-dessous du bord inférieur d'une bague multi-partite.

L'invention a été représentée dans le cas d'un palier hydrostatique. Elle est toutefois applicable à une bague formant une partie d'un palier hydrodynamique.

## Revendications

1. Bague (120) destinée à être montée serrée autour d'un arbre (6) de machine hydraulique (2) pour former une partie d'un palier (100) hydrostatique ou hydrodynamique,
- comprenant dans une direction circonférentielle, au moins un premier tronçon (122), au moins un deuxième tronçon (124) et des moyens (132) de montage des premier et deuxième tronçons autour d'un arbre,
- chaque tronçon (122, 124) comprenant une surface radiale externe (1221, 1241), une surface radiale interne (1222, 1242) et deux tranches (1223, 1224, 1243, 1244) reliant ses surfaces radiales externe et interne,
- le premier tronçon (122) étant pourvu d'au moins un taraudage (127) accessible par une (1223) de ses tranches et adapté pour recevoir une vis (132) faisant saillie à partir d'une tranche (1243) du deuxième tronçon (124), **caractérisée**
- **en ce que** la ou chaque vis (132) est pourvue, sur la partie de sa tige (134) qui fait saillie par rapport à la tranche (1243) du deuxième tronçon (124), d'au moins un relief (140) de manoeuvre de la tige (134) en rotation autour d'un axe longitudinal (X₁₃₂) de la tige pour visser ou dévisser la vis dans le taraudage (127),
- **en ce que** la ou chaque vis (132) est pourvue d'un piston (130) coulissant dans un logement (128) ménagé dans le deuxième tronçon (124), débouchant sur la tranche (1243) du deuxième tronçon et isolé de l'extérieur par un palier (136) dans lequel peut coulisser la tige de la vis et
- **en ce que** le deuxième tronçon (124) est équipé de moyens (150, 156) d'alimentation en fluide sous pression d'une chambre (C₁) de volume variable ménagée entre le piston (130) et le palier (136), à l'intérieur du logement (128).

2. Bague selon la revendication 1, **caractérisée en ce que** chaque tronçon (122, 124) est pourvu, sur une première tranche (1223, 1244), d'au moins un taraudage (127) de réception d'une vis (132) faisant saillie à partir d'une première tranche (1243, 1224) de l'autre tronçon et, sur une deuxième tranche (1224, 1243), d'une vis en saillie (132) destinée à être engagée dans un taraudage (127) accessible par la deuxième tranche (1223, 1244) de l'autre tronçon.

3. Bague selon l'une des revendications précédentes, **caractérisée en ce que** chaque premier tronçon (122) est pourvu de plusieurs taraudages (127), répartis sur la hauteur (H₁₂₂) de sa tranche prise parallèlement à un axe central (X₁₂₂₂) de sa surface radiale interne (1222), alors que chaque deuxième tronçon (124) est pourvu de plusieurs vis en saillie (132), en nombre égal au nombre de taraudages du premier tronçon, réparties sur la hauteur (H₁₂₄) de sa tranche prise parallèlement à un axe central (X₁₂₄₂) de sa surface radiale interne (1242).

4. Bague selon la revendication 3, **caractérisée en ce que** chaque piston (130) d'une vis (132) est disposé dans un logement dédié (128) et **en ce que** les moyens d'alimentation (150, 156) des chambres de ces logements en fluide sous pression sont communs à au moins deux chambres (C₁).

5. Bague selon la revendication 4, **caractérisée en ce que** les moyens d'alimentation comprennent au moins un conduit (150) reliant au moins deux chambres (C₁) dans lesquelles sont disposées les pistons (130) de deux vis (132) distinctes.

6. Bague selon l'une des revendications précédentes, **caractérisée en ce qu'**en configuration assemblée des premier et deuxième tronçons (122, 124), la ou chaque chambre (C₁) est au moins partiellement remplie d'un matériau solide (170).

7. Bague selon l'une des revendications précédentes, **caractérisée en ce qu'**elle comprend des moyens (152, 154) d'alimentation en fluide sous pression d'une deuxième chambre (C₂) de volume variable délimitée par le piston (130) à l'intérieur du logement (128), à l'opposé du palier (136).

8. Machine hydraulique (2) comprenant un organe tournant (3) supporté par un arbre (6) autour duquel est disposé un palier (100) hydrostatique ou hydrodynamique, **caractérisée en ce qu'**elle comprend une bague (120) selon l'une des revendications précédentes montée autour de l'arbre et qui définit une surface radiale interne (121) du palier hydrostatique ou hydrodynamique.

9. Procédé de montage d'une bague (120) sur un arbre (6) de machine hydraulique pour former une partie (121) d'un palier (100) hydrostatique ou hydrodynamique, **caractérisé en ce qu'**il comprend des étapes consistant à :
a) - approcher l'un de l'autre au moins un premier tronçon circonférentiel (122) et au moins un deuxième tronçon circonférentiel (124), comprenant chacun une surface radiale externe (1221, 1241), une surface radiale interne (1222, 1242) et deux tranches (1223, 1224, 1243, 1244) reliant leurs surfaces radiales externes et internes, en amenant au moins une première tranche (1223) du premier tronçon (122) en regard d'une première tranche (1243) du deuxième tronçon (124),
b) - engager (F₁) au moins une vis (132) faisant saillie par rapport à la première tranche (1243) du deuxième tronçon (124) vers un taraudage (127) accessible par la première tranche (1223) du premier tronçon (122),
c) - visser la vis (132) dans le taraudage (127) en l'entraînant en rotation autour d'un axe longitudinal (X₁₃₂) de sa tige (134), par action sur un relief (140) de la tige disposé entre les tranches (1223, 1243) des premier et deuxième tronçons (122, 124) et
d) - injecter un fluide sous pression dans une chambre (C₁) de volume variable délimitée par un piston (130) solidaire de la vis et coulissant dans un logement (128) ménagé dans le deuxième tronçon (124).

10. Procédé selon la revendication 9, **caractérisé en ce que** le fluide sous pression est solidifié postérieurement à son injection dans la chambre de volume variable (C₁).

## Claims

1. A ring (120) designed to be clamped around a shaft (6) of a hydraulic machine (2) for the purpose of forming a portion of a hydrostatic or hydrodynamic bearing (100),
- comprising, in a circumferential direction, least a first segment (122), at least a second segment (124), and means (132) for mounting first and second segments around a shaft;
- each segment (122, 124) comprising a radially outer surface (1221, 1241), a radially inner surface (1222, 1242), and two end faces (1223, 1224, 1243, 1244) interconnecting its radially outer and inside surfaces;
- the first segment (122) being provided with at least one tapped hole (127) accessible via one (1223) of its end faces and adapted to receive a screw (132) projecting from an end face (1243) of the second segment (124); **characterized**
- **in that** the or each screw (132) is provided, on the portion of its shank (134) that projects relative to the end face (1243) of the second segment (124), with at least one piece in relief (140) for driving the shank (134) in rotation about a longitudinal axis (X₁₃₂) of the shank in order to screw the screw into the tapped hole (127) or in order to unscrew it therefrom;
- **in that** the or each screw (132) is provided with a piston (130) slidably mounted in a recess (128) that is provided in the second segment (124), which recess opens out in the end face (1243) of the second segment, and is isolated from the .outside by a bearing (136) through which the shank of the screw can slide; and
- **in that** the second segment (124) is equipped with means (150, 156) for feeding pressurized fluid to a chamber (C₁) of variable volume formed between the piston (130) and the bearing (136), inside the recess (128).

2. A ring according to claim 1, **characterized in that** a first end face (1223, 1244) of each segment (122, 124) is provided with at least one tapped hole (127) for receiving a screw (132) projecting from a first end face (1243, 1224) of the other segment, and a second end face (1224, 1243) of each segment is provided with a projecting screw (132) for engaging in a tapped hole (127) accessible via the second end face (1223, 1244) of the other segment.

3. A ring according to any preceding claim, **characterized in that** each first segment (122) is provided with a plurality of tapped holes (127), distributed over the height (H₁₂₂) of its end face, which height is a dimension parallel to a central axis (X₁₂₂₂) of its radially inner surface (1222), while each second segment (124) is provided with a plurality of projecting screws (132), the number of which is equal to the number of tapped holes in the first segment, and which are distributed over the height (H₁₃₄) of its end face, which height is a dimension parallel to a central axis (X₁₂₄₂) of its radially inner surface (1242).

4. A ring according to claim 3, **characterized in that** each piston (130) of a screw (132) is disposed in a dedicated recess (128) and **in that** the feed means (150, 156) for feeding the chambers of said recesses with pressurized fluid are common to at least two chambers (C₁).

5. A ring according to claim 4, **characterized in that** the feed means comprise at least one duct (150) interconnecting at least two chambers (C₁) in which the pistons (130) of respective ones of two distinct screws (132) are disposed.

6. A ring according to any preceding claim, **characterized in that**, when the first and second segments (122, 124) are in the assembled configuration, the or each chamber (C₁) is at least partially filled with a solid material (170).

7. A ring according to any preceding claim, **characterized in that** it is provided with means (152, 154) for feeding pressurized fluid to a second chamber (C₂) of variable volume that is defined by the piston (130) inside the recess (128), opposite from the bearing (136).

8. A hydraulic machine (2) comprising a rotary member (3) supported by a shaft (6) around which a hydrostatic or hydrodynamic bearing (100) is disposed, said hydraulic machine being **characterized in that** it further comprises a ring (120) according to any preceding claim that is mounted around the shaft and that defines a radially inner surface (121) of the hydrostatic or hydrodynamic bearing.

9. A method of mounting a ring (120) on a shaft (6) of a hydraulic machine so as to form a portion (121) of a hydrostatic or hydrodynamic bearing (100), said method being **characterized in that** it comprises steps consisting in:
a) bringing together at least one first circumferential segment (122) and at least one second circumferential segment (124), each of which has a radially outer surface (1221, 1241), a radially inner surface (1222, 1242) and two end faces (1223, 1224, 1243, 1244) interconnecting its radially outer and radially inner surfaces, by bringing at least a first end face (1223) of the first segment (122) to face a first end face (1243) of the second segment (124);
b) engaging (F₁) at least one screw (132) projecting relative to the first end face (1243) of the second segment (124) into a tapped hole (127) accessible via the first end (1223) of the first segment (122);
c) screwing the screw (132) into the tapped hole (127) by driving it in rotation about a longitudinal axis (X₁₃₂) of its shank (134), by acting on a piece in relief (140) of the shank that is disposed between the end faces (1223, 1243) of the first and second segments (122, 124) ; and
d) injecting a pressurized fluid into a chamber (C₁) of variable volume defined by a piston (130) integral with or secured to the screw and slidably mounted in a recess (128) provided in the second segment (124).

10. A method according to claim 9, **characterized in that** the pressurized fluid is solidified subsequently to being injected into the chamber of variable volume (C₁).

## Patentansprüche

1. Ring (120), der dazu bestimmt ist, um eine Welle (6) einer hydraulischen Maschine (2) herum festgespannt montiert zu werden, um einen Teil eines hydrostatischen oder hydrodynamischen Lagers (100) zu bilden,
- wobei der Ring in einer Umfangsrichtung mindestens ein erstes Teilstück (122), mindestens ein zweites Teilstück (124) und Einrichtungen (132) zum Montieren des ersten und des zweiten Teilstücks um eine Welle aufweist,
- wobei jedes Teilstück (122, 124) eine radiale Außenfläche (1221, 1241), eine radiale Innenfläche (1222, 1242), sowie zwei seine radiale Außenfläche und seine radiale Innenfläche miteinander verbindende Endflächen (1223, 1224, 1243, 1244) aufweist,
- wobei das erste Teilstück (122) mit mindestens einer Gewindebohrung (127) versehen ist, die von einer (1223) seiner Endflächen her zugänglich ist und dazu ausgelegt ist, eine Schraube (132) aufzunehmen, die von einer Endfläche (1243) des zweiten Teilstücks (124) vorsteht,
**dadurch gekennzeichnet,**
- **dass** die bzw. jede Schraube (132) auf dem bezüglich der Endfläche (1243) des zweiten Teilstücks (124) vorstehenden Teil ihres Schaftes (134) mit mindestens einem Vorsprung (140) zum drehenden Betätigen des Schaftes (134) um eine Längsachse (X₁₃₂) des Schaftes versehen ist, um die Schraube in die Gewindebohrung (127) hinein oder aus dieser heraus zu drehen,
- **dass** die bzw. jede Schraube (132) mit einem Kolben (130) versehen ist, der in einer in dem zweiten Teilstück (124) vorgesehenen Aufnahme (128) gleitet, welche auf die Endfläche (1243) des zweiten Teilstücks ausmündet und von der Außenseite durch ein Lager (136) getrennt ist, in dem der Schaft der Schraube gleitend verschiebbar ist, und
- **dass** das zweite Teilstück (124) mit Zuführungseinrichtungen (150, 156) ausgestattet ist, um einer Kammer (C₁) mit einem veränderlichen Volumen, die zwischen dem Kolben (130) und dem Lager (136) im Inneren der Aufnahme (128) vorgesehen ist, ein unter Druck stehendes Fluid zuzuführen.

2. Ring nach Anspruch 1,
**dadurch gekennzeichnet,**
**dass** jedes Teilstück (122, 124) an einer ersten Endfläche (1223, 1244) mit mindestens einer Gewindebohrung (127) zum Aufnehmen einer Schraube (132) versehen ist, die von einer ersten Endfläche (1243, 1224) des anderen Teilstücks vorsteht, und an einer zweiten Endfläche (1224, 1243) mit einer vorstehenden Schraube (132) versehen ist, die dazu bestimmt ist, in eine von der zweiten Endfläche (1223, 1244) des anderen Teilstücks her zugängliche Gewindebohrung (127) einzugreifen.

3. Ring nach einem der vorherigen Ansprüche,
**dadurch gekennzeichnet,**
**dass** jedes erste Teilstück (122) mit mehreren Gewindebohrungen (127) versehen ist, die über die parallel zu einer Mittelachse (X₁₂₂₂) seiner radialen Innenfläche (1222) genommene Höhe (H₁₂₂₂) seiner Endfläche verteilt sind, während jedes zweite Teilstück (124) mit mehreren vorstehenden Schrauben (132) versehen ist, deren Anzahl gleich der Anzahl von Gewindebohrungen des ersten Teilstücks ist und die über die parallel zu einer Mittelachse (X₁₂₄₂) seiner radialen Innenfläche (1242) genommene Höhe (H₁₂₄₂) seiner Endfläche verteilt sind.

4. Ring nach Anspruch 3,
**dadurch gekennzeichnet,**
**dass** jeder Kolben (130) einer Schraube (132) in einer eigens dafür vorgesehenen Aufnahme (128) angeordnet ist,
sowie **dadurch gekennzeichnet, dass** die Zuführungseinrichtungen (150, 156) zum Zuführen von unter Druck stehendem Fluid zu den Kammern dieser Aufnahmen gemeinsam für mindestens zwei Kammern (C₁) vorgesehen sind.

5. Ring nach Anspruch 4,
**dadurch gekennzeichnet,**
**dass** die Zuführungseinrichtungen mindestens eine Leitung (150) aufweisen, die mindestens zwei Kammern (C₁) miteinander verbindet, in denen die Kolben (130) von zwei verschiedenen Schrauben (132) angeordnet sind.

6. Ring nach einem der vorherigen Ansprüche,
**dadurch gekennzeichnet,**
**dass** die bzw. jede Kammer (C₁) im zusammengebauten Zustand des ersten und des zweiten Teilstücks (122, 124) zumindest teilweise mit einem festen Material (170) gefüllt ist.

7. Ring nach einem der vorherigen Ansprüche,
**dadurch gekennzeichnet,**
**dass** er Zuführungseinrichtungen (152, 154) zum Zuführen von unter Druck stehendem Fluid zu einer zweiten Kammer (C₂) mit einem veränderlichen Volumen aufweist, welche durch den Kolben (130) im Inneren der Aufnahme (128) entgegengesetzt zu dem Lager (136) begrenzt ist.

8. Hydraulische Machine (2) mit einem drehbaren Organ (3), das von einer Welle (6) getragen ist, um welche ein hydrostatisches oder hydrodynamisches Lager (100) angeordnet ist,
**dadurch gekennzeichnet,**
**dass** sie einen Ring (120) nach einem der vorherigen Ansprüche aufweist, der um die Welle herum montiert ist und eine radiale Innenfläche (121) des hydrostatischen oder hydrodynamischen Lagers bildet.

9. Verfahren zum Montieren eines Rings (120) auf einer Welle (6) einer hydraulischen Maschine, um einen Teil (121) eines hydrostatischen oder hydrodynamischen Lagers (100) auszubilden,
**dadurch gekennzeichnet,**
**dass** es Schritte umfasst, die aus folgenden bestehen:
a) gegenseitiges Annähern von mindestens einem ersten umfangsmäßigen Teilstück (122) und mindestens einem zweiten umfangsmäßigen Teilstück (124), welche jeweils eine radiale Außenfläche (1221, 1241), eine radiale Innenfläche (1222, 1242) und zwei seine Außenfläche und seine Innenfläche miteinander verbindende Endflächen (1223, 1224, 1243, 1244) aufweisen, durch Heranführen von mindestens einer ersten Endfläche (1223) des ersten Teilstücks (122) an eine erste Endfläche (1243) des zweiten Teilstücks (124),
b) Einführen (F₁) von mindestens einer Schraube (132), die in Bezug auf die erste Endfläche (1243) des zweiten Teilstücks (124) vorsteht, in eine Gewindebohrung (127), die von der ersten Endfläche (1223) des ersten Teilstücks (122) her zugänglich ist,
c) Eindrehen der Schraube (132) in die Gewindebohrung (127) durch drehendes Betätigen um eine Längsachse (X₁₃₂) ihres Schaftes (134) durch Einwirken auf einen zwischen den Endflächen (1223, 1243) des ersten und zweiten Teilstücks (122, 124) vorgesehenen Vorsprung (140) des Schaftes, und
d) Einpressen eines unter Druck stehenden Fluids in eine Kammer (C₁) mit einem veränderlichen Volumen, die durch einen Kolben (130) begrenzt ist, welcher einstückig mit der Schraube ausgebildet ist und in einer in dem zweiten Teilstück (124) vorgesehenen Aufnahme (128) gleitet.

10. Verfahren nach Anspruch 9,
**dadurch gekennzeichnet,**
**dass** das unter Druck stehende Fluid nach seinem Einpressen in die Kammer (C₁) mit einem veränderlichen Volumen verfestigt wird.
